# FASCICULE DE BREVET EUROPEEN

(11) **EP 1 982 310 B1**
(45) Date de publication et mention de la délivrance du brevet: **23.03.2011**
(21) Numéro de dépôt: 07731554.7
(22) Date de dépôt: 01.02.2007
(51) Int. Cl.: G06T 15/50

(54) **PROCEDE DE SYNTHESE D'UNE IMAGE VIRTUELLE PAR LANCER DE FAISCEAUX**
VERFAHREN ZUR SYNTHETISIERUNG EINES VIRTUELLEN BILDES DURCH STRAHLABGABE
METHOD FOR SYNTHESIZING A VIRTUAL IMAGE BY BEAM LAUNCHING

(30) Priorité: 01.02.2006 FR 0600914
(43) Date de publication de la demande: 22.10.2008
(73) Titulaire: Redway 3D, 92210 Saint Cloud (FR)
(72) Inventeur: DEPARIS, Renaud, F-75015 Paris (FR)
(74) Mandataire: Brochard, Pascale
(86) Numéro de dépôt international: PCT/FR2007/050726
(87) Numéro de publication internationale: WO 2007/090974

(56) Documents cités:
- EP-A- 0 442 682
- N. A. CARR ET AL.: "The ray engine" GRAPHICS HARDWARE, 2002, pages 1-10, XP009068495 cité dans la demande
- N. THRANE ET AL.: "A Comparison of Acceleration Structures for GPU Assisted Ray Tracing" 1 août 2005 (2005-08-01), UNIVERSITY OF AARHUS - DENMARK , AARHUS - DENMARK , XP009068493 Extrait de l'Internet: URL:http://www.larsole.com/files/GPU_BVHth esis.pdf> page 26, alinéa 1 - alinéa 3 page 31, alinéa 1 - alinéa 4
- R TOLEDO ET AL.: "Extending the graphic pipeline with new GPU-accelerated primitives" 2004, ISA - INRIA LORRAINE - FRANCE , XP009068579 Extrait de l'Internet: URL:http://alice.loria.fr/publications/pap ers/2004/ray_tracing_gpu/gpu_accelerated_p rimitives.pdf>
- WALD I ET AL: "Interactive rendering with coherent ray tracing" COMPUTER GRAPHICS FORUM, AMSTERDAM, NL, vol. 20, no. 3, 2001, pages C-153, XP002269801 ISSN: 0167-7055
- A. Y. CHANG: "A Survey of Geometric Data Structures for Ray Tracing" 16 octobre 2001 (2001-10-16), POLYTECHNIC UNIVERSITY - BROOKLIN, USA , BROOKLIN, NY, USA , XP009068497 Extrait de l'Internet: URL:http://cis.poly.edu/tr/tr-cis-2001-06. pdf> cité dans la demande

## Description

La présente invention concerne la création d'images de synthèse réalistes pour des scènes tridimensionnelles, notamment pour des applications de conception assistée par ordinateur (CAO), de jeux vidéo, de simulation ou de post-production cinématographique.

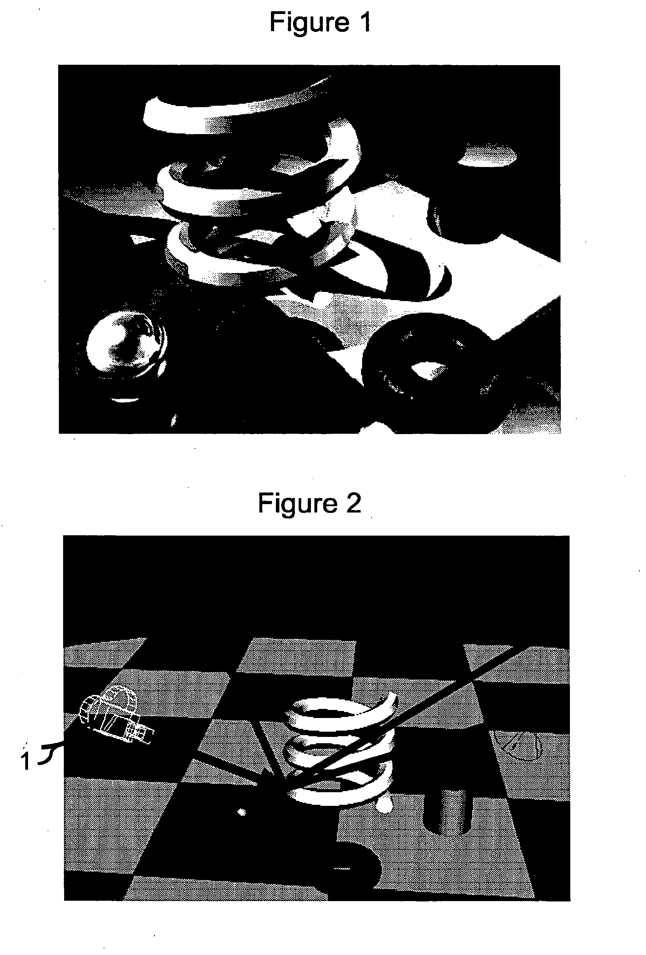

Des scènes tridimensionnelles, telle que celle illustrée par la figure 1, sont conçues par ordinateur à l'aide de maillages définissant une multitude d'objets 3D dans la scène. Le rendu d'une telle scène depuis un point de vue se fait sous la forme d'une image (matrice de pixels) et doit tenir compte de nombreux paramètres tels que l'éclairage ou la nature des objets (revêtement réflecteur, matériau transparent à la lumière, ...). De tels rendus sont complexes à mettre en oeuvre.

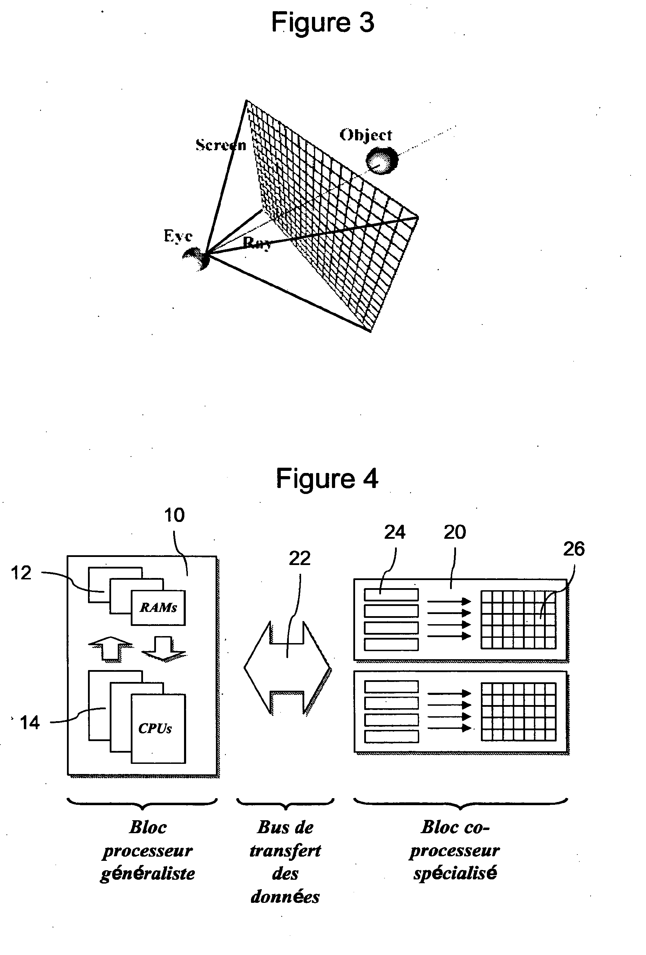

On connaît, depuis la fin des années 70, l'utilisation du lancer de rayons pour le calcul des éclairages et des ombrages des objets dans de telles images de synthèse. Illustré par les figures 2 et 3, le lancer de rayons consiste à tracer un rayon A issu du point de vue 1 (la caméra) de la scène vers la zone de chacun des pixels de l'image (calcul en fonction de l'ouverture de la caméra et du nombre de pixels composant l'image finale) puis à étudier tout ou partie des propagations de ce rayon sur les différents objets composant la scène afin de déterminer la couleur des pixels. En pratique, tout rayon primaire A issu de la caméra 1 est propagé par réflexion C, par transmission (non représentée) ou par diffusion vers une source de lumière (rayon d'ombre B). Chacun des rayons propagés par réflexion ou transmission est de nouveau propagé lorsqu'il rencontre un autre objet de la scène : ce sont les multiples propagations d'un rayon. De par la nature des matériaux composant les objets touchés par le rayon et de par l'existence d'ombres, ces rayons permettent d'évaluer pour chacun des pixels la couleur à afficher en tenant compte de l'ombre portée (rayons B) et des matériaux des objets vus par simple et multiples transmissions et réflexions. Selon le nombre de réflexions, transmissions ou sources de lumière prises en compte, le calcul de 10 rayons par pixel est communément atteint. On voit donc que le nombre de rayons à calculer pour une image entière est très important.

Pendant de nombreuses années et comme décrit par le brevet US 5 031 117, cet algorithme a été mis en oeuvre uniquement sur des unités centrales de traitement (CPU - *central processing unit)* parfois en parallèle fournissant des rendus très réalistes. La nature intrinsèque de l'algorithme de lancer de rayons et la polyvalence du CPU rendent cette technique fortement consommatrice en temps de calcul.

Pour leur part, les cartes graphiques ou unités de traitement graphique (GPU - *graphic processing unit*) sont efficaces pour le traitement simultané de plusieurs pixels, en utilisant la matrice z-buffer (définie plus loin). Les récents développements de ces cartes ont vu naître des applications du lancer de rayons directement sur le GPU, comme par exemple dans la demande de brevet US 2005 / 0041024 ou la publication scientifique « Ray tracing on a stream processor » (Timothy John Purcell, rapport de thèse, Université de Stanford, Mars 2004). Cependant, elles restent limitées au niveau de la performance du rendu obtenu, en deçà de celle souhaitée pour des temps de traitements équivalents réalisés sur le CPU.

Une amélioration du lancer de rayons traditionnel a été apportée par l'utilisation de faisceaux, décrite dans les publications scientifiques « Beam tracing polygonal objects » (Paul S.Heckbert, SIGGRAPH'84, pp. 119-127, Juillet 1984) et « Une synthèse des variantes du lancer de rayons et du lancer de faisceaux » (J-M Hasenfratz, Revue internationale de CFAO, Vol. 13, n°3, Septembre 1998, pp. 235-264) reprenant notamment la précédente publication de Heckbert. L'approche adoptée appelée « crayon » consiste à adjoindre à un rayon axial des rayons paraxiaux voisins pour couvrir des zones plus étendues dans un seul lancer. Cette approche a cependant été mise de côté car les expérimentations menées ont conduit à conclure que la technique du lancer de faisceaux n'est pas rentable et que de nombreux problèmes persistent.

Il n'en est pas moins sûr que les acteurs dans l'imagerie de synthèse (bureaux de design, jeux vidéo, post-production) sont de plus en plus exigeants quant aux temps de calcul des images. Il y a donc un besoin important de trouver une solution pour diminuer ce temps de calcul tout en s'appuyant sur des composants informatiques courants. Une solution a été apportée par N. Carr, J. Hall et J. Hart (Université d'Illinois) dans leur publication « The ray engine » (Garphics Hardware, 2002, pp. 1-10), dans laquelle une architecture mixte CPU-GPU est utilisée. Le CPU est utilisé pour piloter l'algorithme général du lancer de rayons et émettre des requêtes au GPU, lequel est exploité pour la massification du calcul des intersections entre les rayons et les triangles des maillages d'objets. Les résultats obtenus sont comparables aux meilleurs CPU dédiés au lancer de rayon. L'accroissement des performances des GPU devrait même augmenter nettement ces performances d'ensemble.

In apparaît que le GPU reste surchargé et limite les performances du système. Les demandes actuelles en matière de génération d'images virtuelles requièrent un minimum d'interactivité (au moins une image générée toutes les quelques secondes). Les GPU actuels bon marché ne permettent pas d'atteindre ces performances pour des scènes complexes (design, post-production). Un besoin d'optimisation de l'application du lancer de rayon à de telles architectures est donc sous-jacent.

La présente invention vise à apporter une solution aux limitations de l'art antérieur. L'invention repose sur l'architecture mixte CPU-GPU dans laquelle une optimisation du lancer de rayons est fournie par l'utilisation de faisceaux efficaces et une répartition des charges de calcul entre le CPU et le GPU selon leurs capacités propres à accéder aux mémoires (CPU) ou à traiter en parallèle de nombreuses données graphiques (GPU). L'invention permet de grouper en faisceaux les rayons selon des critères de proximité spatiale afin de réduire le modèle de propagation à un nombre de faisceaux bien inférieur au nombre total de rayons. Cela repose sur le principe que les rayons qui sont a priori « proches » sont susceptibles de rencontrer les mêmes objets et donc de se propager « ensemble » dans la scène.

Une optimisation de la présente invention est de résoudre l'interaction de ces faisceaux propagés, non pas sur toute la scène, mais sur une partie de celle-ci. Dans ce dessein, le CPU prétraite les faisceaux afin de déterminer un ensemble grossier d'éléments de la scène qui seront intersectés par le faisceau, puis transmet au GPU cet ensemble. Ainsi le nombre d'opérations de calcul que le GPU doit réaliser est nettement réduit comparativement au traitement de l'intersection d'un faisceau avec tous les éléments de la scène ou de tous les rayons avec tous les éléments de la scène.

A cet effet, l'invention a, tout d'abord, pour objet un procédé d'élaboration d'une image de synthèse d'une scène depuis une caméra, ladite scène comprenant une pluralité d'objets définis par des maillages élémentaires stockés dans une base de données, le procédé comprenant :
- (a) une étape de définition, par une unité centrale de traitement, d'une pluralité de rayons issus de ladite caméra vers ladite scène observée ;
- (b) une étape de traitement de ladite pluralité de rayons comprenant :
   o une sous-étape (b4) de regroupement, éventuellement par ladite unité centrale, de rayons en faisceaux ;
- (c) une étape de propagation desdits faisceaux, comprenant :
   o (c1) une première étape de détermination, pour chacun desdits faisceaux propagés, d'un sous-ensemble de tous les éléments de maillage qui sont intersectés par ledit faisceau propagé ; puis
   o (c2) une deuxième étape de calcul, par une unité de traitement graphique et pour chacun desdits faisceaux propagés, des intersections entre les éléments de maillage dudit sous-ensemble et les rayons du faisceau propagé ;
- (d) une étape de génération de ladite image de la scène suite à ladite étape de propagation.

On entend par « caméra » le terme générique pour évoquer le point de vue et de rendu de la scène. Celui-ci peut être l'oeil d'un observateur, le capteur d'une caméra vidéo ou d'un appareil photo.

De même, le « maillage » concerne la représentation d'une forme 3D à partir d'éléments plans, par exemple des triangles ou des quadrilatères, ou à partir de surfaces telles que NURBS (surface B-spline rationnelle non uniforme), carreaux de Béziers, surfaces polynomiales.

On entend par « défini » le fait que les coordonnées des chacun des éléments du maillage sont stockées dans la base de données. Les objets peuvent être représentés par des triangles, auquel cas les coordonnées des sommets du triangle dans l'espace de la scène sont stockées en base.

La définition des rayons s'appuie principalement sur la notion de lancer de rayons précédemment exposée. On assimile la définition des rayons à celle de l'image de synthèse finale comme matrice de pixels de dimensions définies. En effet, les rayons concordent généralement avec le point de vue et un pixel de l'image finale. Le couple (point de vue, direction du pixel) définit un exemple de rayon. De ce fait, lorsque le CPU récupère les paramètres de visualisation de la scène, c'est-à-dire la position de la caméra, la direction de visualisation, la verticale caméra et l'angle d'ouverture de visualisation, les dimensions de l'image à synthétiser définissent directement la pluralité de rayons.

Dans l'application du lancer de rayons, ces derniers et plus largement les faisceaux de la présente invention, permettent de déterminer les éléments de maillage visibles (partiellement visibles en cas d'atténuation par effet d'ombre, de réflexion, ...) et d'en déduire les caractéristiques de couleur des pixels composant l'image finale.

Le terme « rayon ou faisceau propagé » est à entendre comme étant, selon le cas, le rayon ou le faisceau issu directement de la caméra (rayon primaire), le rayon ou le faisceau d'ombre (après réflexion ou non), le rayon ou le faisceau réfléchi (une ou plusieurs réflexions), le rayon ou le faisceau transmis, le rayon ou le faisceau servant à calculer ou à échantillonner un échange d'énergie entre des éléments du maillage ... issu de tout principe optique régissant le chemin optique de la lumière.

Comme mentionné précédemment, le « GPU » ou unité de traitement graphique est un composant informatique spécialisé qu'utilise le système informatique auquel il est connecté pour procéder au tracé de formes géométriques à partir de primitives graphiques (points, triangles, ...). Le GPU est efficace pour réaliser un même calcul sur un grand nombre de données. On l'oppose, pour l'invention, au « CPU » ou unité centrale de traitement qui est un composant généraliste efficace dans l'accès aux mémoires et dans le traitement de tâches spécifiques ou l'organisation de données en structures.

Dans la solution que propose l'invention, le sous-ensemble d'éléments de maillage déterminé comprend, en tout état de cause, les éléments de maillage (ci-après indifférents mentionnés comme triangles ou éléments de maillage) qu'intersectent chacun des rayons du faisceau. Ainsi les calculs effectués par le GPU sur ce sous-ensemble ne sont pas faussés comparativement à des calculs sur tous les éléments de maillage. On note même que ceux-ci sont optimisés puisqu'un grand nombre de requêtes sur des éléments de maillage non pertinents est évité. Un facteur d'accélération de 10 pour les calculs peut être ainsi aisément obtenu.

La génération de l'image de synthèse finale réside dans la détermination des couleurs de chacun des pixels. Les faisceaux propagés permettent de déterminer pour un objet visible en un pixel de l'image, les éléments de la scène intervenants principalement soit en ombrage, soit en réflexion, soit en transmission.

Dans un mode de réalisation, ladite étape de détermination (c1) dudit sous-ensemble est réalisée par ladite unité centrale de traitement CPU connectée à ladite base de données. Le CPU est exploité au vu de ses capacités d'accès à la mémoire stockant la base de données et aux mémoires vives dans lesquelles il stocke des données intermédiaires. Cela procure une efficacité accrue. En effet, la conjonction du parallélisme CPU et GPU, de la rapidité de traitement du CPU pour la détermination du sous-ensemble grâce à l'accès rapide aux données des triangles en mémoire et de la baisse de charge du GPU du fait des traitements sur un sous-ensemble de triangles assure une accélération de la restitution de l'image de synthèse par un facteur supérieur à 10.

Comme évoquée ci-dessus, la constitution du sous-ensemble d'éléments de maillage offre une optimisation des charges de calcul entre le CPU et le GPU. Pour tirer profit des capacités d'accès du CPU à la mémoire, on structure les faisceaux en sections de faisceau le long de la direction de propagation, ces sections étant supportées par une structure d'accélération comme il en existe déjà dans l'état de l'art, notamment « A survey of goemetric data structures for ray tracing » (allen Y. Chang, 13 octobre 2001, rapport de thèse Ph.D à l'Université Polytechnique de Brooklyn, New York). Puis, ladite étape de détermination (c1) d'un sous-ensemble d'éléments de maillage comprend une sous-étape de propagation du faisceau selon une structure d'accélération et de détermination pour chacune desdites sections le long de la structure d'accélération desdits éléments de maillage intersectés. Ledit sous-ensemble d'éléments de maillage est alors constitué de l'ensemble desdits éléments de maillage intersectés par le faisceau le long de la structure d'accélération.

La structure d'accélération est une décomposition simple de l'espace de la scène, par exemple à l'aide d'une base hiérarchique régulière de voxels (pixels volumiques) ou à l'aide d'une base hiérarchique de plans séparant l'espace *(kd-tree).* Les sections du faisceau sont alors déterminées par les frontières des voxels le long de la direction de propagation du faisceau. Puis pour chaque section du faisceau, on détermine les triangles du maillage coupant le faisceau.

Par ailleurs, une optimisation de la solution pour diminuer le nombre de calculs à réaliser pour le lancer de l'ensemble des rayons consiste à minimiser le nombre de rayons. Ainsi, il peut être prévu que, pour une image de synthèse représentée par une matrice de pixels, il est généré au plus un rayon (moyenne calculée comme ratio du nombre de rayons par le nombre de pixels) par pixel traversant ce pixel lors de ladite étape de génération de rayons (a).

Dans une variante visant principalement un meilleur rendu, notamment en ce qui concerne l'anti-crénelage (ou anti-aliasing), il peut être prévu que, pour une image de synthèse représentée par une matrice de pixels, il est généré un ensemble de rayons par pixel, tous traversant ce pixel, lors de ladite étape de génération de rayons (a). Cette variante est réalisée au détriment du temps de calcul.

La présence de plusieurs rayons par pixel permet notamment de lutter contre le crénelage qu'introduit l'échantillonnage des pixels sur la scène. Il peut également être envisagé de remplacer le rayon traversant le pixel par un faisceau conique plus ou moins concordant avec la forme du pixel, comme cela a été évoqué dans la demande de brevet PCT WO93/01561 ou la publication scientifique Hasenfratz98 précédemment citée (page 9, figure 3).

Une part non négligeable de l'efficacité de la présente invention réside dans l'utilisation de faisceaux de rayons optimisés. Il apparaît alors important de fournir une méthode efficace de génération de ces faisceaux. Dans ce dessein, ladite étape de traitement des rayons (b) comprend, préalablement à la sous-étape (b4) :
- une sous-étape (b1) de génération, par ladite unité de traitement graphique, d'une image d'identificateurs de la scène dans laquelle, en chaque pixel, sont enregistrées les données d'identification d'un ou plusieurs éléments de maillage visibles à ce pixel ;
- une sous-étape (b2) de détermination, pour chaque pixel de l'image d'identificateurs, d'au moins un point d'intersection dudit(desdits) rayon(s) primaire(s) traversant le pixel avec le(s)dit(s) élément(s) de maillage dont les données d'identification sont enregistrées aux coordonnées du pixel de ladite image, lorsque de telles données d'identification existent pour le pixel ;
- éventuellement, une sous-étape (b2') de détermination, pour chaque pixel de l'image d'identificateurs, d'au moins une direction de ré-émission dudit(desdits) rayon(s) primaire(s) traversant le pixel avec ledit élément de maillage dont les données d'identification sont enregistrées dans le pixel, lorsque de telles données d'identification existent pour le pixel ;
- une sous-étape (b3) de regroupement des pixels dont lesdits points d'intersection précédemment déterminés sont spatialement cohérents.

En outre, ladite sous-étape de regroupement en faisceaux (b4) consiste à regrouper au sein d'un même faisceau les rayons associés aux pixels regroupés lors de ladite sous-étape (b3).

L'image d'identificateurs (primaires s'il s'agit des rayons directement issus de la caméra) a généralement la même dimension que l'image de synthèse finale que l'on souhaite élaborer. Cependant, il est envisagé d'augmenter le nombre de rayons pour l'étude de l'image finale (et donc la taille des images d'identificateurs) afin de disposer d'un plus grand nombre d'informations permettant de traiter les problèmes de crénelage, par exemple. L'image finale est alors un sous-échantillonnage de ces informations.

A titre d'exemple, chacun des pixels composant la matrice de pixels de l'image est doté d'une couleur dont la valeur dans le code RVB (Rouge-Vert-Bleu) est égale à la donnée d'identification de l'élément de maillage visible à ce pixel. Cette image permet de disposer de façon synthétique de chacun des éléments de maillage visibles à chacun des pixels et ainsi de récupérer rapidement les données d'identification des éléments de maillage du premier obstacle rencontré pour commencer l'analyse d'un lancer de rayon ou faisceau. Un tel tracé par la carte graphique de l'image primaire, sans tenir compte des lumières, est très efficace : la carte graphique GPU reçoit du CPU les coordonnées de tous les triangles de maillage stockés dans la base et procède au tracé de l'image par des méthodes conventionnelles utilisant notamment la matrice Z (z-*buffer -* mémoire servant à stocker l'identifiant du triangle à afficher pour chaque pixel et mise à jour pour ne conserver que celui du triangle le plus proche de la caméra) dont elle dispose. Afin de tirer profit de cette passe de tracé pour des surfaces transparentes d'éléments, il peut être convenu de mémoriser pour chaque pixel, les éléments de maillage intersectés par le rayon, c'est-à-dire l'élément directement visible et ceux potentiellement visibles par transparence, par exemple en mémorisant successivement dans les composantes couleurs du pixel les données d'identification des éléments de maillage dans l'ordre dans lequel ils sont intersectés.

Pour chaque pixel, la connaissance de l'élément de maillage touché grâce à ses données d'identification dans l'image, et donc de ses paramètres de définition qui sont stockés dans la base de données, permet de calculer (étape b2) aisément le point d'intersection entre le rayon traversant le pixel (droite) et l'élément de maillage (plan) : il s'agit d'une simple résolution d'intersection droite-plan.

Une alternative pourrait consister en ce que la carte graphique GPU réalise directement le calcul des intersections entre rayons et éléments de maillage, et que les composantes couleurs RVB des pixels de l'image d'identificateurs comprennent directement les coordonnées d'intersection d'un rayon avec l'élément de maillage, auquel cas l'étape b2 est réalisée par la carte graphique.

Une autre alternative pourrait consister en ce que la carte graphique GPU réalise le calcul de la longueur du rayon de la caméra au point d'intersection de l'élément de maillage le plus proche, et que la composante couleur des pixels de l'image d'identificateurs comprenne cette valeur (image de profondeur de la matrice Z), auquel cas l'étape b2 est réalisée par le CPU en calculant le point sur le rayon à la distance lue dans l'image d'identificateurs.

Le terme « rayons spatialement cohérents » concerne des rayons qui sont sensiblement parallèles et dont les points d'intersection avec le triangle de maillage le plus proche de la caméra sont proches dans l'espace. Le regroupement de rayons spatialement cohérents permet de grouper, en vu d'un traitement commun, les rayons qui, grosso modo, touchent un même objet (points d'intersection proches) dans l'espace de la scène et avec le même angle d'attaque (rayons quasi-parallèles). « Sensiblement parallèles » signifie des rayons issus de la caméra dans sensiblement la même direction. Dans le cas d'une image numérique sous forme de pixels, on peut voir ces rayons comme étant ceux générés depuis la caméra vers une zone définie (un carré de 32x32 pixels par exemple) de l'image.. Les rayons parmi ceux de la zone définie ayant des points d'intersections avec les éléments de maillage de la scène dont la distance est inférieure à une valeur seuil (par exemple la taille d'un voxel) peuvent être considérés par exemple comme spatialement cohérents. Parmi ces rayons, ceux qui ont, en outre, des directions dont l'angle est inférieur à une autre valeur seuil (par exemple 10 degrés) peuvent être considérés comme sensiblement parallèles. Les faisceaux constituent ainsi des cônes à base régulière (carré, triangle) ou irrégulière (forme quelconque selon les rayons pris en considération).

Pour optimiser des rayons de taille homogène sur l'ensemble de l'image, il peut être également prévu de subdiviser l'image totale en zones élémentaires, par exemple 32 x 32 pixels, à l'intérieur desquelles le regroupement de rayons a lieu.

Egalement pour optimiser ces regroupements, les informations de transmission ou réflexion (direction de ré-émission de l'étape b2') peuvent être prises en considération afin de sous-diviser des faisceaux spatialement cohérents en des faisceaux plus efficaces.

Selon les différentes lois de propagation des rayons lumineux prises en compte pour la détermination des couleurs des pixels de l'image de synthèse, lesdits faisceaux propagés comprennent les faisceaux transmis et/ou réfléchis et/ou d'ombre et/ou des faisceaux d'interactions diffuses et/ou des faisceaux d'échantillonnage d'un phénomène énergétique relatif à la propagation de la lumière.

Selon le degré de précision du rendu souhaité et donc le réalisme, il peut être intéressant d'analyser la contribution de multiples réflexions et/ou transmissions des rayons et faisceaux sur les différents objets de la scène. En effet, en présence de surfaces très réfléchissantes, les rayons sont réfléchis de nombreuses fois avant que leur atténuation soit suffisante pour les négliger. Ainsi, il peut être prévu que ladite étape de propagation desdits faisceaux (c) soit appliquée récursivement à chacun desdits faisceaux transmis et/ou réfléchis et/ou d'ombre et/ou d'interactions et/ou d'échantillonnage. Eventuellement, ladite étape de générations des faisceaux (b) peut également être reproduite pour chacun de ces faisceaux ou pour l'ensembl de ceux-ci.

Des optimisations peuvent être également apportées à cette approche. Notamment, dès qu'un pourcentage d'atténuation d'un faisceau est atteint, il n'est plus propagé : on considère que les faisceaux en amont fournissent suffisamment d'informations de couleurs pour le rendu final de la zone de pixels considérée. Les autres faisceaux peuvent être propagés jusqu'à atteindre le même seuil d'atténuation.

Par ailleurs, il peut être intéressant de privilégier la vitesse de calcul au rendu et, par conséquent, de limiter la propagation des rayons transmis et/ou réfléchis à une, deux ou trois récurrences.

Particulièrement, le procédé peut comprendre, de manière récursive, à chaque nouvelle propagation, une étape de traitement des rayons propagés conformément à l'étape (b) pour les regrouper en faisceaux par ladite unité centrale (b4) et une étape de propagation des faisceaux conformément aux étapes (c1) et (c2). Cela permet d'optimiser à chaque étape les calculs par l'utilisation de faisceaux appropriés.

Il s'avère qu'un faisceau, alors qu'il a été propagé plusieurs fois par un même objet, peut rencontrer plusieurs obstacles (éléments de maillage d'objets) lors d'une nième propagation. Il peut être convenu, pour améliorer l'efficacité du traitement ultérieur, de considérer différemment les sous-faisceaux ayant rencontrés les différents obstacles. Ainsi, le procédé comprend, lorsque lesdites intersections calculées lors de ladite étape de calcul (c2) ne sont pas spatialement cohérentes, une étape de division (c3) d'un faisceau propagé en des sous-faisceaux propagés regroupant les rayons dont les intersections calculées à l'étape (c2) sont spatialement cohérentes. Cette division du faisceau en sous-faisceaux est très semblable, quant aux critères de division, au regroupement des rayons en faisceaux (étape b3).

Il s'avère également qu'après de multiples propagations par exemple transmission ou réflexion, l'on peut rencontrer des problèmes de propagation, par exemple un coin de mur frappé par un faisceau et dont une partie des rayons est réfléchie dans une direction par un pan de mur et l'autre partie est réfléchie dans une toute autre direction par l'autre pan de mur. Il est ainsi prévu que le procédé comprend, en outre, une étape de division (c3') d'un faisceau propagé transmis ou réfléchi présentant des rayons non-cohérents en sous-faisceaux.

Ici, il faut entendre comme « rayons non-cohérents » des rayons dont les vecteurs de direction des rayons ne sont pas sensiblement parallèles, c'est-à-dire dont l'angle est par exemple supérieur à une valeur seuil ou dont les points de départs sont spatialement trop éloignés les uns des autres. Cela peut être le cas également de textures d'embossage sur lesquelles le faisceau est réfléchi de façon très perturbée, nécessitant parfois la subdivision du faisceau en sous-faisceaux.

L'invention a également pour objet un programme d'ordinateur comprenant une pluralité d'instructions aptes à mettre en oeuvre le procédé d'élaboration d'une image de synthèse précédemment décrit.

Egalement, l'invention a pour objet un support de stockage informatique comprenant ce programme d'ordinateur.

Egalement, l'invention a pour objet un système pour la mise en oeuvre du procédé. Le système comprend au moins une unité centrale de traitement reliée à au moins une mémoire de stockage et au moins une unité de traitement graphique relié à ladite unité centrale de traitement par un bus,
- ladite unité centrale de traitement comprenant des moyens aptes à générer (a) des rayons issus de ladite caméra vers ladite scène observée, à regrouper (b4) lesdits rayons en faisceaux, à déterminer la propagation (c) desdits faisceaux et à déterminer (c1), pour chacun des faisceaux propagés; un sous-ensemble de tous les éléments de maillage qui sont intersectés par ledit faisceau propagé ;
- ladite unité de traitement graphique comprenant des moyens aptes à calculer (c2), pour chacun desdits faisceaux propagés, les intersections entre les éléments de maillage dudit sous-ensemble et lesdits rayons propagés et à générer (d) une image de la scène à l'aide desdits faisceaux propagés.

L'invention sera également mieux comprise à l'aide des dessins, dans lesquels :
- la figure 1 représente une scène virtuelle comportant 5000 triangles de maillage pour la représentation d'objets, scène virtuelle dont on souhaite la synthèse d'une image de la scène au moyen de la présente invention ;
- les figures 2 et 3 illustrent la propagation des rayons dans un processus de lancer de rayon ;
- la figure 4 représente un exemple d'architecture système pour la mise en oeuvre de la présente invention ;
- la figure 5 est un graphe synthétisant la propagation des rayons ;
- la figure 6 est un ordinogramme de la présente invention ;
- la figure 7 illustre un rendu graphique par la carte graphique pour l'obtention des triangles de maillage visibles ;
- les figures 8 à 10 illustrent la structure du faisceau selon la présente invention ;
- la figure 11 illustre la propagation des faisceaux selon la présente invention ;
- la figure 12 illustre la réflexion des rayons dans le cas d'une surface à texture d'embossage ;
- la figure 13 représente un exemple de structure d'accélération régulière pour la mise en oeuvre de l'invention ;
- la figure 14 représente un ordinogramme pour le calcul du rayon d'ombre de la figure 6 ;
- les figures 15 et 16 illustrent le calcul des ombres pour la présente invention ;
- la figure 17 représente un ordinogramme pour le calcul du rayon réfléchi ou transmis de la figure 6 ;
- la figure 18 illustre les rayons secondaires du lancer de rayon ; et
- la figure 19 représente un tore pour la comparaison de performances entre la présente invention et des techniques de l'état de l'art.

Des planches en couleur correspondant aux planches 1/10, 3/10 et 10/10 ont également été fournies lors du dépôt de la présente demande et sont jointes au dossier pour une meilleure compréhension de l'invention.

En référence à la figure 4, un système pour la mise en oeuvre de l'invention comprend :
- un module de traitement généraliste 10 permettant la résolution de tâches généralistes, notamment avec des mémoires RAM 12 *(random access memory),* permettant l'accès et la modification continuelle des informations qui y sont contenues. Ce bloc comprend un ou plusieurs processeurs 14 (CPUs) et est à mémoire unifiée ou non,
- un autre module de traitement spécialisé 20 ou GPU (carte graphique) permettant l'exécution de tâches spécialisées en parallèle. Les données reçues par ce bloc via un bus de transfert 22 produisent, via des unités de traitement 24, un résultat écrit dans une mémoire 26 sur le module 20 lui-même, et
- un bus de transfert bidirectionnel 22 entre les deux entités précédemment décrites, permettant d'émettre des commandes du bloc généraliste vers les co-processeurs et de récupérer des résultats calculés par ces derniers.

Typiquement, une machine classique aujourd'hui contient un ou plusieurs CPUs, est à mémoire unifiée (sauf pour les caches mémoire L1 et L2 de chaque processeur) et possède un bus de transfert AGP ou PCI-E pour communiquer avec un ou plusieurs GPU. Les GPUs calculent en parallèle les ordres de tracé qui leur sont envoyés à l'aide de nuanceurs de sommets ou de pixels et écrivent les résultats produits dans de la mémoire vidéo. Cette mémoire vidéo peut-être copiée dans les mémoires CPU si besoin est, ou bien servir directement à l'affichage.

Pour la suite, nous appelons CPU 10 le module de calcul généraliste et GPU le module spécialisé 20.

Le GPU comprend des éléments généralement programmables pour le traitement et les calculs sur les pixels des images à traiter, et notamment :
- des nuanceurs de sommets *(vertex shader)* qui permettent de mettre en oeuvre des fonctions graphiques pour modifier les sommets des polygones d'un objet (notamment les attributs des sommets) et ainsi de déplacer la représentation de celui-ci dans l'image,
- des nuanceurs de pixels *(pixel shader)* qui permettent de mettre en oeuvre des fonctions graphiques pour modifier l'éclairage et les effets de surface résultant de l'affichage des polygones des objets (texture par exemple). Le *pixel shader* agit sur les composantes (couleur, transparence, profondeur de la matrice Z) de chaque pixel, indépendamment des autres pixels et permet de modifier l'apparence des objets pour obtenir un rendu plus proche de la réalité,
- le cache ou matrice Z *(z-buffer)* qui est une mémoire supplémentaire à celle servant à stocker les couleurs des pixels, et qui permet d'associer à chaque pixel une coordonnée normalisée Z. Elle est notamment utilisée dans l'invention pour mémoriser l'objet ou le triangle de maillage visible (c'est-à-dire le plus proche du point de vue) en chaque pixel.

Le CPU dispose dans ses mémoires RAM 12 des données de définition des triangles de maillage des objets de la scène sous forme de base de données associant une donnée d'identification de chacun des triangles avec les coordonnées des trois sommets dans l'espace considéré. Eventuellement, ces données peuvent être rapatriées d'une base de données en mémoire morte.

Le CPU exécute également un programme applicatif sous forme d'instructions pour la réalisation des étapes du procédé qui sont décrites ci-après. Ces instructions s'organisent en requêtes ou « passes de rendu » vers le GPU consistant en la génération d'une image résultant de calculs spécifiques par le GPU. Chaque cycle de « passe de rendu » comprend :
- des calculs effectués par le CPU,
- l'émission d'une requête à destination du GPU pour des calculs parallèles, généralement sur tous les pixels et pour l'ensemble des faisceaux,
- la résolution par le GPU des ordres de tracé de la requête,
- éventuellement, la récupération par le CPU des résultats de calcul, puis
- éventuellement, un ou plusieurs ordres de composition de l'image finale intégrant l'ensemble des données de couleur de pixels calculées lors des différentes passes de rendu,
- l'affichage de l'image de synthèse finale par le GPU.

Plusieurs passes de rendu peuvent être tramées afin d'optimiser les traitements, en commençant par exemple les calculs par le CPU d'une nouvelle passe alors que le GPU calcule l'image de la précédente. On parallélise ainsi les opérations CPU et GPU.

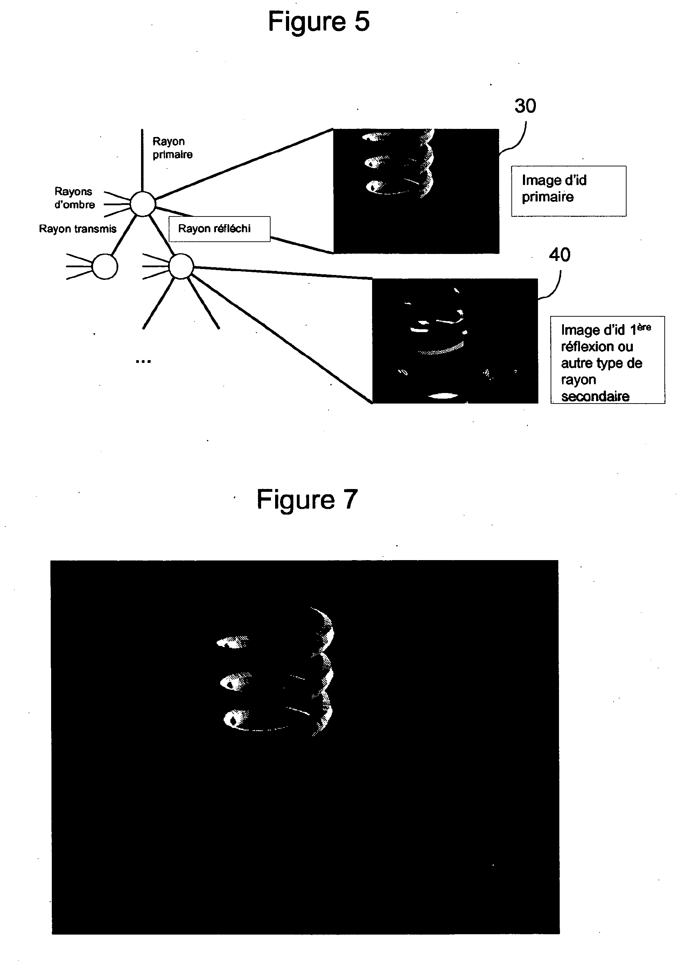

La figure 5 illustre l'arbre des rayons calculés lors de la présente invention. Cet arbre est déterminé au préalable et comprend, par exemple un rayon primaire issu directement de la caméra, des rayons d'ombre au premier obstacle (nombre selon le nombre de sources de lumière), un rayon transmis, un rayon réfléchi, et des rayons d'ombre appropriés à chacun des niveaux d'obstacles touchés par les rayons.

Les programmes de lancer de rayons classiques calculent généralement un arbre de rayons par rayon primaire émis. L'arbre total a une profondeur fixe et seulement une sous-partie de celui-ci est évaluée, en fonction du parcours des rayons dans la base. La présente invention génère, quant à elle, des passes de rendu qui permettent d'avancer dans la résolution de l'arbre des rayons, globalement, pour la scène entière, niveau par niveau.

La présente invention aborde la résolution de cet arbre de rayons profondeur par profondeur. Ainsi, il peut être prévu de recalculer les faisceaux de rayons pour chacune des profondeurs de l'arbre.

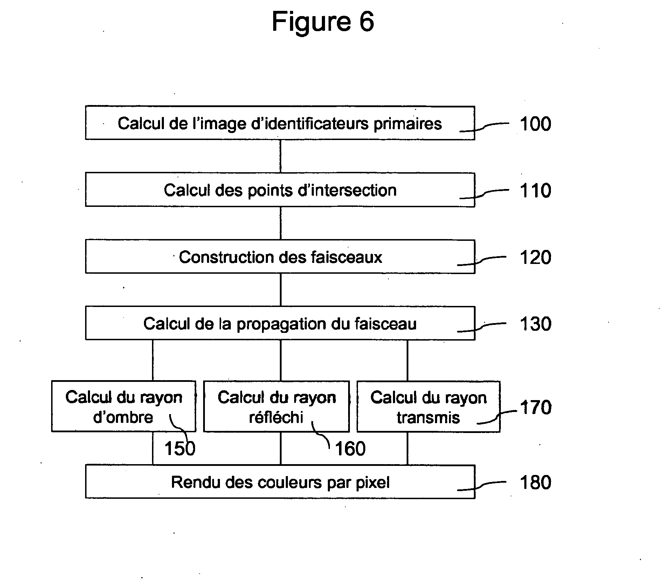

En référence à la figure 6, les différentes étapes composant l'invention vont être décrites plus en détail.

### Calcul du rayon primaire

| *Calcul de l'image d'identificateurs primaires 100* | | |
|---|---|---|
| ***CPU*** | ***Bus*** | ***GPU*** |
| Emission de la liste des triangles des objets à tracer (en rendu matériel classique). | ⇒ Listes de triangles | Résolution du tracé avec un rendu matériel z-buffer. Ecriture de l'identificateur de chaque triangle pour chaque pixel de l'image. |
| Récupération du résultat sur le CPU : pour chaque pixel de l'image, on dispose donc du triangle que rencontre chaque rayon primaire en premier. | ⇐ Transfert d'une image pixel à la résolution écran | Stockage de l'image transférée. |

Le CPU 10 accède en mémoire RAM 12 les données des triangles de maillage (pour chaque triangle, numéro d'identification unique et coordonnées des trois sommets). Il émet ensuite une requête de tracé à destination du GPU 20 via le bus 22 comprenant la liste des triangles. Cet ordre de tracé est émis en utilisant les API (interfaces de programmation) graphiques usuelles telles Direct3D ou OpenGL (noms commerciaux). Ce sont des ordres de tracé de primitives géométriques par la carte, ce qui ne limite pas aux seuls triangles les ordres de tracé. En outre, le plus souvent on indique directement des objets à tracer à la carte, qui ont été chargés sur celle-ci au préalable.

Cette résolution du tracé est réalisée par un rendu matériel (rendu matériel : calculs effectués non par un logiciel mais par des composants matériels parallélisés, typiquement dans une carte graphique) se basant sur l'utilisation de la mémoire z-buffer (pour déterminer, par exemple, le triangle le plus proche du point de vue et donc à afficher pour chaque pixel). Dans cette résolution, le GPU écrit le numéro d'identification de chaque triangle à afficher pour chaque pixel de l'image, par exemple si un pixel (i, j) doit afficher un triangle x, alors la valeur de couleur affectée à ce pixel est x. Les couleurs des pixels sont communément codées selon le format R8V8B8A8 (Rouge 8 bits, Vert 8 bits, Bleu 8 bits, Alpha 8 bits) permettant d'indexer un très grand nombre de triangles. L'image obtenue, illustrée par la figure 7, attribue donc une couleur à chacun des pixels. Cette couleur est indépendante de la couleur réelle des objets de la scène mais représentative du numéro d'identification du triangle à afficher à ce pixel.

Cette image d'identificateurs primaires 30 généralement de même résolution que l'écran est stockée en mémoire vidéo du GPU puis transférée au CPU qui dispose désormais, pour chaque pixel, du triangle que rencontre en premier chaque rayon primaire.

De retour à la figure 5, d'autres images d'identificateurs similaires sont générées à partir de résultats de séquences de tracé envoyées au GPU. On distingue deux types d'images d'identificateurs, générées à différentes profondeurs dans l'arbre de rayons :
- l'image 30 d'identificateurs générée par résolution de la propagation des rayons primaires ,
- l'image 40 d'identificateurs générée par résolution de calculs d'intersection entre rayons secondaires et géométrie.

Ces images d'identificateurs servent à la mise en place des faisceaux, et constituent l'état du lancer de rayons pour la scène entière à une profondeur donnée dans l'arbre des rayons. La résolution du calcul de lancer de faisceaux génère l'image d'identificateurs suivante dans l'arbre des rayons pour la scène.

Il est à noter que les rayons d'ombres ne génèrent pas d'images supplémentaires, dans la mesure où ce sont des feuilles dans l'arborescence des rayons.

### Calcul des points d'intersection 110

Connaissant l'identificateur d'un triangle, l'équation du rayon primaire (point de vue 1 + vecteur directeur du rayon), on calcule très simplement l'intersection rayon triangle (qui se résume à une intersection droite-plan) : on dispose donc des points d'intersection des rayons primaires avec la géométrie de la scène.

Une alternative peut être envisagée : le CPU émet la liste des triangles des objets à tracer au GPU. La résolution du tracé par le GPU comprend directement le calcul du point d'intersection du rayon correspondant à chaque pixel avec le triangle tracé à ce pixel. Les composantes couleur de chaque pixel sont alors codées sur un plus grand nombre de bits, par exemple R32V32B32, R24V24B24 ou R16V16B16 avec une coordonnée flottante du point d'intersection par composante couleur. Puis le CPU récupère les résultats : pour chaque pixel, on dispose alors du point d'intersection touché par le rayon. Une perte de précision numérique est présente pour cette alternative, d'autant plus importante que les composantes couleurs sont codées sur peu de bits, étant donné que le format de stockage en base sur le CPU utilise en général des valeurs flottantes encodées sur 32 ou 64 bits. En outre, cette alternative n'est pas optimisée en ce qu'elle requiert des performances de bus 22 nettement supérieures.

### Construction du faisceau 120

Le faisceau sert à grouper un certain nombre de rayons Ce groupement initial est calculé à partir de l'image d'identificateurs primaires 30 précédemment calculée.

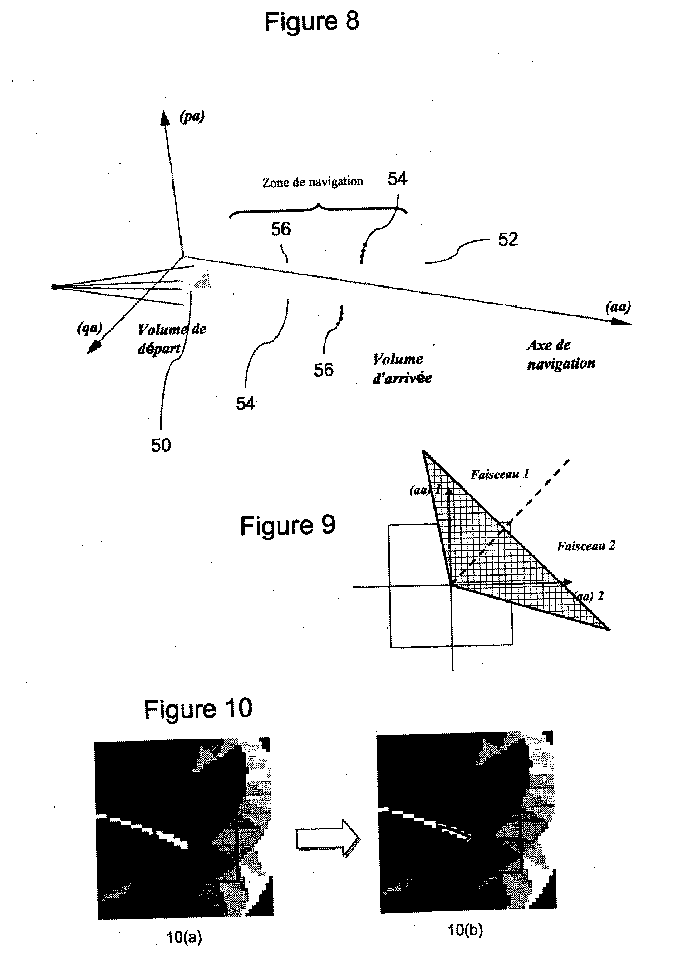

De façon générale en référence à la figure 8, le faisceau est une simple pyramide tronquée définie par une zone 50 de l'espace contenant les points de départ des rayons englobés et une zone 52 de l'espace contenant les points d'arrivée possibles des rayons si ceux-ci sont connus ou une zone englobant les points d'arrivée possibles des rayons. La zone de l'espace totale couverte par le faisceau est délimitée par les plans suivants :
- valeur min / max suivant l'axe de navigation (aa), par exemple distance de la caméra au premier objet rencontré de l'espace (min) et distance de la caméra à l'élément de maillage le plus distant (max),
- faces gauche et droite 54, parallèles à l'axe vertical (pa),
- faces hautes et basses 56, parallèles à l'axe horizontal (qa).

Si le faisceau couvre plusieurs axes de navigation, plusieurs faisceaux sont définis comme illustré par la figure 9.

L'image d'identificateurs 30 est découpée arbitrairement en zones rectangulaires n x m pixels qui servent de base au regroupement des pixels en faisceaux. Le choix de la taille de ce découpage permet de moduler le nombre de faisceaux finalement générés. Il est meilleur de ne pas générer de volumes de départ de faisceaux trop importants pour les performances de navigation des faisceaux. Par exemple on utilise des zones de 32x32 pixels. En référence à la figure 10a, cette zone 32 x 32 définit une zone de départ des faisceaux. Par groupe de 32 x 32 pixels sur cette image, le CPU regroupe tous les points correspondant à des rayons dont les intersections avec la géométrie sont spatialement voisins pour définir le volume de départ du faisceau.

Par exemple, on peut choisir le premier point de la zone considérée et regrouper avec celui-ci tous les points distants de moins d'une distance pré-établie (par exemple, une distance sensiblement égale à la taille d'un élement de la structure d'accélération, comme un voxel). On recommence le processus ensuite avec tous les points qui n'ont pas été ainsi regroupés spatialement, jusqu'à ce que tous soient groupés ou restent isolés, n'ayant pas de voisins répondant au critère de regroupement.

L'image 10b représente la création de trois faisceaux A, B et C sur cette zone élémentaire n x m pixels. Selon les critères utilisés, un plus grand nombre de faisceaux peut être créé. Sur l'exemple de la figure 10b, le faisceau C pourrait être sous-divisé en deux faisceaux pour prendre en compte les deux orientations principales des facettes du fil de ressort. Pour ce faire, il peut être convenu que le CPU détermine, en même temps que les points d'intersection, les directions de ré-émission (transmission, réflexion, ...) afin de grouper les rayons également sur ces critères.

### Propagation du faisceau

### Calcul de la propagation du faisceau 130

Il y a lieu dès lors de déterminer la propagation de chacun des faisceaux par le CPU. On distingue deux comportements de propagation de faisceau selon leur nature :
- les faisceaux intervenant dans la résolution des calculs d'ombrages, et
- les faisceaux correspondant aux autres rayons (réflexion, transmission, ...).

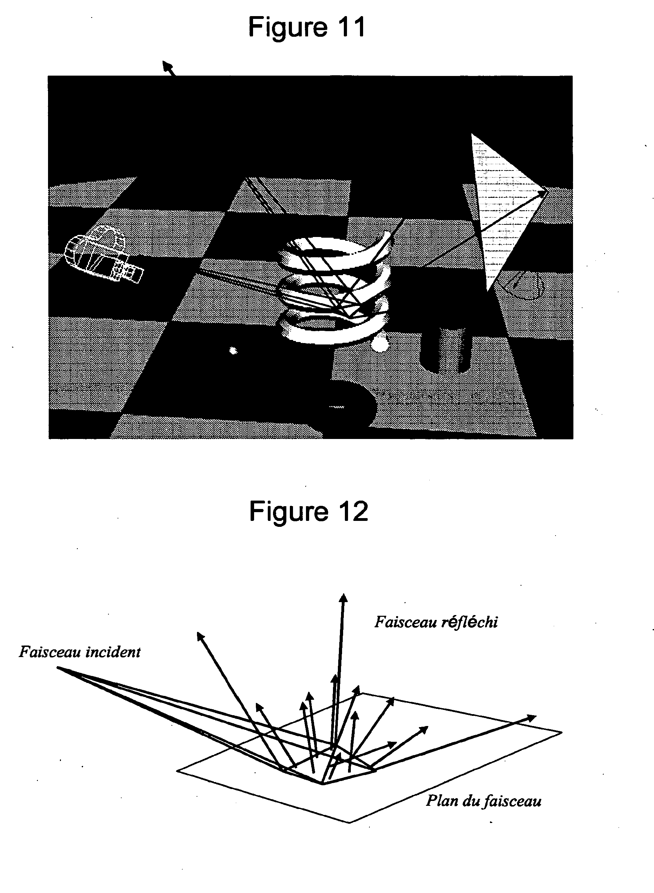

En référence à la figure 11, dans le cas des faisceaux utilisés pour la détermination des ombrages, la propagation du faisceau est simplement définie par la convergence de celui-ci vers le volume de la source lumineuse elle-même, tous les rayons du faisceau devant y aboutir.

Dans le cas de faisceaux utilisés pour d'autres rayons - réflexions, transparences, illumination globale -, la zone d'arrivée du faisceau ne peut être définie qu'en disposant de la direction de propagation de chaque rayon qui le constitue. Dans la plupart des cas, le CPU émet à destination du GPU une requête de calcul des normales au plan définissant les éléments de maillage visible de l'image d'identificateurs 30. En retour, le CPU disposant de cette normale aux plans rencontrés par les rayons du faisceau est apte à déterminer chacun des rayons propagés (simple réflexion ou transmission dans un milieu d'indice de propagation différent) et donc de calculer la trace du faisceau englobant les rayons propagés, par exemple le faisceau réfléchi 2 est défini par les rayons réfléchis les plus extrêmes du faisceau primaire incident A.

Une alternative consiste à émettre une requête de calcul des directions de ré-émission des rayons au GPU et non seulement de la normale à la surface à prendre en compte. En retour le CPU dispose alors de la direction de propagation des rayons pour le type de propagation souhaitée.

Dans l'hypothèse où l'on définit un volume englobant la scène (typiquement à l'aide de la valeur max précédemment définie), les intersections des rayons frontières du faisceau 2 avec ce volume définissent une zone plane d'impact possible des rayons contenus dans le faisceau. Cette zone sert de zone d'arrivée 52 dans la mise en place de la structure d'accélération.

Dans le cas de surface ou texture d'objet aux propriétés particulières, par exemple une texture d'embossage (figure 12), la distribution des rayons réfléchis est perturbée sur les pixels qui constituent la zone de départ du faisceau. Pratiquement, c'est la normale à la surface qui est perturbée. La distribution des directions étant récupérée sur le CPU après calcul par le GPU (soit via les normales, soit directement), il est possible de choisir les directions « extrémales » pour la définition des arêtes de la pyramide d'un faisceau réfléchi ou transmis : il s'agit de l'enveloppe de toutes les directions considérées. Eventuellement, si les rayons extrêmes sont trop divergents, une sous-division du faisceau en faisceaux de rayons cohérents est envisagée.

### Calcul du rayon d'ombre 150

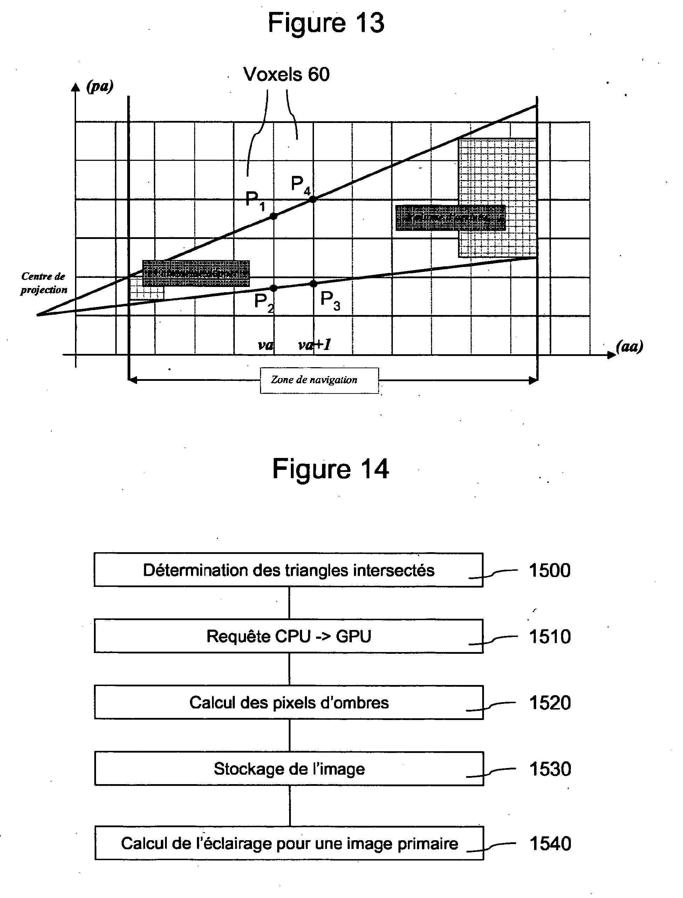

Par cela, on s'intéresse à déterminer si ce qui est vu à travers la caméra est éclairé. Pour cela, il est nécessaire de calculer (150) les rayons d'ombre, qui vont permettre de déterminer si une source de lumière doit contribuer au calcul de la couleur d'un pixel des triangles intersectés par le faisceau primaire. Cette étape 150 est décrite plus en détail en référence à la figure 14.

### Détermination des triangles intersectés 1500

Pour chaque faisceau regroupant un certain nombre de rayons spatialement voisins on calcule les triangles intersectés par le faisceau à l'aide d'une structure d'accélération. Cela consiste, pour le CPU, à appliquer la structure d'accélération sur le faisceau 1 de la figure 11 puis à calculer de façon incrémentale, pour chacune des sections du faisceau, les triangles intersectés.

Plus en détail, concernant les structures d'accélération, des exemples de structures d'accélération sont proposés dans la publication scientifique précitée de M. Chang.

En référence à la figure 13, l'espace de la scène est divisé en voxels (pixels volumiques) 60, de préférence selon une hiérarchie régulière.

Pour les deux plans constitués par les axes de navigation (aa, pa) et (aa, qa), on calcule suivant les (aa) croissants, à la frontière des voxels, la section du faisceau dans la base. Cela est matérialisé par les quatre points P₁ à P₄ sur la figure 13. Les sections sur les deux plans délimitent la surface de voxels croisée par le faisceau entre va et va+1 (la tranche [va, va+1] du faisceau dans la base). Pour la suite, le CPU va utiliser la structure d'accélération pour calculer de façon incrémentale (section après section le long de l'orientation de propagation du faisceau) l'intersection du faisceau avec des éléments de la scène. Cette structure s'applique à tous les faisceaux propagés (ombres, réflexions, ...).

Tout au long des cycles d'élaboration d'images virtuelles, cette structure d'accélération est mise à jour pour tenir compte des modifications de la scène (par exemple, un objet qui bouge). De telles modifications peuvent conduire à redéfinir la structure d'accélération et/ou à remettre à jour le contenu de certains voxels pour lesquels les éléments de maillage contenus auraient changé.

Ainsi, récupérés du traitement du faisceau par la structure d'accélération, les numéros d'identification des triangles rencontrés par chaque faisceau sont stockés et associés à la zone d'image qui a servi à définir le faisceau. Chaque triangle projecteur d'ombre a été trouvé par un faisceau issu de rayons démarrant sur des triangles intersectés par les rayons. On associe chaque triangle projecteur d'ombre aux numéros d'identification des triangles récepteurs d'ombres afin de ne tracer effectivement la projection des triangles que pour les pixels pour lesquels le triangle projecteur d'ombre projette de l'ombre sur le récepteur correct. Cela permet de restreindre la zone de projection aux pixels qui doivent en recevoir.

Cette méthode très efficace s'oppose aux techniques de l'art antérieur qui visaient à déterminer l'intersection la plus proche, la cellule dans laquelle se trouve le rayon étant entièrement balayée afin de trouver avec certitude le triangle qui coupe le premier le rayon. Dans la présente invention, on ne dispose pas uniquement de l'intersection la plus proche mais également de toutes les autres, c'est-à-dire des triangles « cachés » sur le chemin du faisceau. Ces triangles vont notamment servir dans le calcul des projections d'ombres.

### Emission de la requête de tracé de l'image d'ombre 1510

| ***CPU*** | ***Bus*** | ***GPU*** |
|---|---|---|
| Emission pour chaque pixel des triangles à tracer qui peuvent projeter de l'ombre pour le rayon d'ombre correspondant à ce pixel | ⇒ Listes de triangles, identificateurs des récepteurs, équations des plans des triangles récepteurs | Projection des triangles sur les plans des triangles recevant de l'ombre : Le vertex shader effectue les projections des points, le pixel shader n'autorise l'application de l'ombre que si l'identificateur du récepteur est égal à l'identificateur de l'image primaire pour le pixel tracé. |

Le CPU émet alors une requête à destination du GPU pour le tracé de l'image d'ombre des rayons primaires. Pour cela il transmet la liste des triangles, des numéros d'identification des triangles intersectés pour chaque faisceau propagé d'ombre dans la structure d'accélération, et les sommets des triangles intersectés.

### Calcul des pixels d'ombre 1520

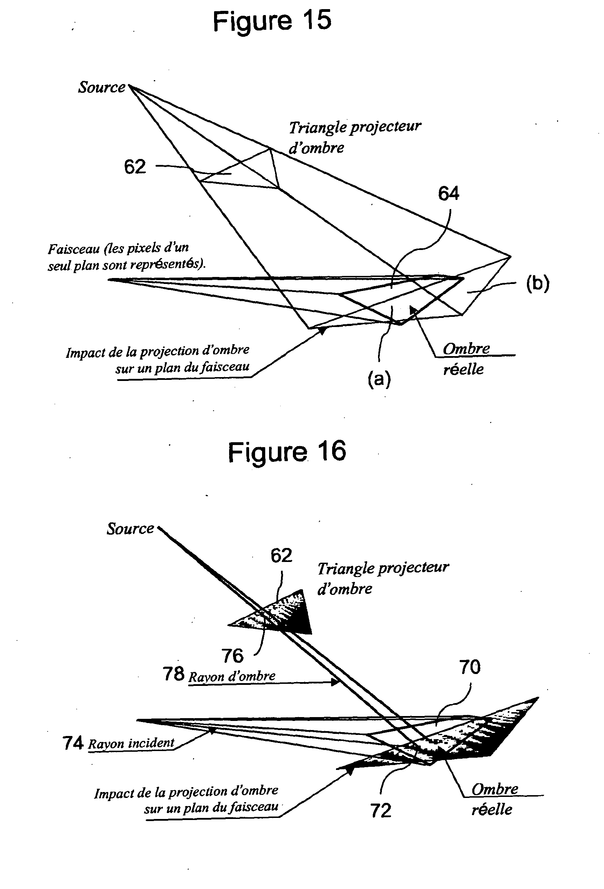

En référence à la figure 15, le GPU effectue la projection des triangles projecteurs d'ombre (c'est-à-dire ceux intersectés par le faisceau d'ombre et déterminés par la structure d'accélération) sur les triangles intersectés par le faisceau primaire et visible sur l'image de synthèse finale. Dans ce dessein, il convient de procéder aux étapes suivantes :
- l'image, généralement, de taille écran recevant les ombres est colorée en blanc (pas d'ombres),
- le triangle projecteur d'ombres 62 est tracé dans son espace original, et la carte GPU transforme les positions des points en les projetant sur le plan du faisceau recevant les ombres à l'aide d'un *« vertex shader* ». Ce plan du faisceau recevant les ombres est compris comme étant un ensemble des points d'intersection du rayon primaire qui sont coplanaires, c'est-à-dire constituant une surface 64 sur laquelle est susceptible de se projeter l'ombre. Il y aura donc lieu de répéter l'opération de calcul pour tous les plans du faisceau, c'est-à-dire toutes les surfaces composants les points d'intersection du faisceau primaire,
- la couleur des pixels tracés est noire si et seulement si le numéro d'identification du triangle receveur de la projection du triangle 62 au pixel concerné est le même que le numéro d'identification du plan de faisceau 64 pour lequel il a été trouvé que le triangle est projecteur d'ombre (numéro d'identification du pixel concerné dans l'image d'identificateurs primaires) (cas a sur la figure 15). Sinon, la couleur du pixel est laissée intacte (cas b sur la figure 15).

Le test d'égalité des numéros d'identification permet le « détourage » des ombres. Nous disposons, d'une part, pour chaque pixel de l'image d'identificateurs qui a servi à calculer les faisceaux, et d'autre part, des triangles qui ont été collectés par la propagation de ces faisceaux. Le test d'égalité des numéros d'identification permet de ne colorier effectivement que les pixels réellement dans l'ombre, la projection « débordant » de la zone réelle à ombrer, car calculée pour un plan receveur infiniment grand.

Ainsi, il n'a jamais été nécessaire de calculer explicitement l'intersection d'un rayon et d'un triangle. Les faisceaux ont permis de transformer un calcul d'ombrage par rayon en une succession de projection de triangles effectuée par la carte graphique. De plus, la transformation d'un calcul d'ombrage en séquence de tracé de triangles s'insère naturellement dans les architectures des GPU actuels. Par conséquent, les performances de tracé sont excellentes, et permettent d'atteindre des facteurs d'accélération de l'ordre de x100 par rapport aux techniques traditionnelles de lancer de rayons.

### Stockage de l'image 1530

Il s'en suit le stockage, par le GPU, de l'image contenant les ombres à appliquer pour chaque pixel pour cette source de lumière.

L'étape 150 est réitérée pour le nombre de sources de lumière présentes dans la scène.

En cas d'ombre d'objets texturés illustré par la figue 16, une solution plus générique peut être utilisée pour tenir compte des degrés d'ombrage. Les étapes suivantes sont alors réalisées :
- l'image de taille écran recevant les ombres est colorée en blanc (pas d'ombres),
- une zone 70 couvrant les pixels du plan du faisceau est tracée pour chaque triangle projecteur d'ombre 62,
- le *« vertex shader »* calcule le point d'intersection 72 du rayon incident 74 sur le plan du faisceau,
- *le « pixel shader* » calcule l'intersection 76 du rayon d'ombre 78 avec le triangle 62. Le test d'égalité des numéros d'identification entre le triangle 62 intersecté et les triangles projecteurs d'ombre calculés par la structure d'accélération permet de ne valider le calcul d'intersection que pour les pixels qui reçoivent effectivement de l'ombre, comme dans le cas de la méthode précédente,
- éventuellement, on nuance la valeur de l'ombrage selon les propriétés de transmission du triangle projecteur d'ombre 62.

### Calcul d'éclairage pour l'imaqe primaire 1540

L'étape précédente a permis de déterminer en chaque pixel de l'image s'il devait y avoir de l'ombre appliquée ou non. Appliquer de l'ombre correspond en fait à ne pas éclairer le pixel. L'image d'ombre calculée précédemment est utilisée par cette passe comme masque pour n'éclairer que les pixels qui ne reçoivent pas d'ombre.

| ***CPU*** | ***Bus*** | ***GPU*** |
|---|---|---|
| Emission de la liste des triangles des objets à tracer (en rendu matériel classique). | ⇒ Listes de triangles | Résolution du tracé avec un rendu matériel z-buffer. L'image d'ombre permet d'appliquer les éclairages correctement. Le calcul de la couleur est effectué par les *shaders* décrivant les matériaux et propriétés visuelles des objets tracés |

Lors du tracé de l'image de synthèse, le GPU prend en compte les ombres stockées à l'étape 1530. Il initialise alors la mémoire de rendu vidéo avec le résultat du tracé : IMAGE 1.

Il calcule ensuite, à l'aide des *shaders* les couleurs de chacun des pixels, en tenant compte des ombres.

A ce stade, la scène est tracée avec des ombres pour chaque éclairage présent (couleur des pixels). L'image est déjà complète au niveau des ombres et des couleurs « directes » (c'est-à-dire sans tenir compte par exemple des composantes de réflexion ou de transmission). Les étapes suivantes vont compléter le résultat : ajout des réflexions ou des transparences, illumination globale ou autre.

### Les rayons secondaires 160, 170

Les rayons réfléchis et transmis peuvent être traités de façon similaire puisque seules leurs caractéristiques de propagation (réflexion contre transmission) diffèrent.

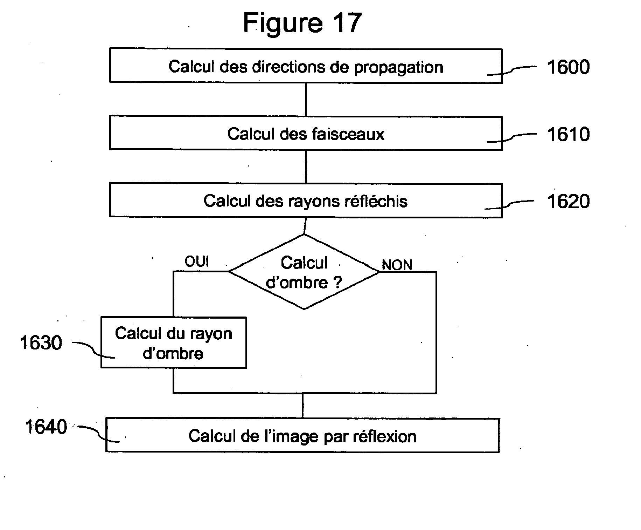

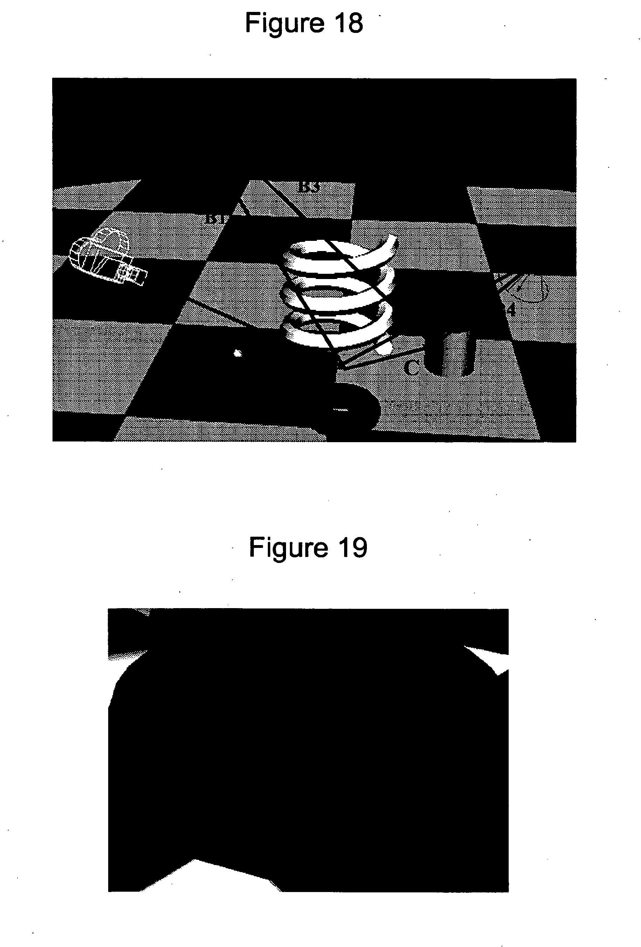

Nous nous intéressons alors aux rayons réfléchis (faisceau 2, figure 11) en référence à la figure 17 et comme illustré par la figure 18. Cette dernière montre le rayon C propagé par réflexion du rayon primaire A, ce rayon C ayant notamment par propagation deux rayons d'ombres B₃ et B₄.

Afin de déterminer quels sont les objets trouvés par les rayons réfléchis, il est nécessaire de calculer - au préalable - leur direction de propagation (1600).

| ***CPU*** | ***Bus*** | ***GPU*** |
|---|---|---|
| Emission de la liste des triangles des objets à tracer (en rendu matériel classique). | ⇒ Listes de triangles | Résolution du tracé avec un rendu matériel z-buffer. Les shaders calculent la direction réfléchie pour chaque pixel. On calcule également les points touchés par les rayons. |
| Récupération des directions réfléchies pour chaque rayon. | ⇐ Transfert d'une image pixel à la résolution écran | Stockage de l'image de direction sur le GPU, à la pleine précision. Stockage de l'image des points de départ des rayons. |

Le CPU émet une requête au GPU pour le calcul des directions de réflexion en transmettant les triangles visibles en chaque pixel. Le GPU procède, pour chaque pixel de l'image, au calcul de la direction de réflexion du rayon incident pour chaque pixel, en tenant compte des propriétés surfaciques de l'objet touché.

Ces données sont stockées sous forme d'image : à chaque pixel correspond une direction tridimensionnelle que l'on stocke dans les composantes couleurs du pixel ainsi qu'éventuellement, un point de départ de la réflexion (point d'intersection du faisceau).

Les données transférées en retour au CPU sont stockées par ce dernier.

Ensuite, il devient possible de calculer les faisceaux et de réaliser leur propagation dans la structure d'accélération (1610). On peut réutiliser les mêmes faisceaux que ceux calculés précédemment pour le rayon d'ombre. Cependant, des réflexions peuvent entraîner une séparation du faisceau en plusieurs sous-faisceaux (cas d'un coin de mur atteint par un même faisceau et le coupant en deux du point de vue des directions de ré-émission des rayons). Cette étape 1610 permet donc de redéfinir si nécessaire ces faisceaux.

Les faisceaux peuvent être recalculés si nécessaire à partir de l'image récupérée précédemment et qui permet de tenir compte des points d'intersection spatialement proches en prenant en compte des directions de ré-émission (direction de réflexion par exemple) cohérentes.

Ensuite, la structure d'accélération est appliquée par le CPU à chacun des faisceaux pour déterminer les triangles intersectés par le faisceau réfléchi comme dans l'étape 1500. Appelons ces triangles : les triangles intersectés de deuxième rang. Pour chacun des faisceaux, on enregistre donc l'ensemble des triangles intersectés de second rang.

Enfin, on procède au calcul des rayons réfléchis (1620) : quel est le triangle le plus proche intersecté par chaque rayon réfléchi ?

| ***CPU*** | ***Bus*** | ***GPU*** |
|---|---|---|
| Emission pour chaque pixel des triangles trouvés par le faisceau correspondant au rayon pour ce pixel. | ⇒ Listes de triangles, tracé par rectangle, identificateurs des émetteurs, | Résolution via *shaders* des intersections rayon - triangle. |
| Récupération de l'image d'identificateurs des triangles réfléchis. | ⇐ Transfert d'une image pixel à la résolution écran | Stockage de l'image d'identificateurs des triangles visibles dans les réflexions sur le GPU. |

Il s'agit d'une nouvelle passe de rendu par le GPU.

Le CPU émet au GPU une requête de calcul des intersections entre les rayons réfléchis et les triangles intersectés de second rang.

La résolution de cette requête est réalisée par les *shaders* du GPU. Dans ce dessein, la distance d'intersection sur le rayon est utilisée comme profondeur pour le z-buffer, ce qui permet de ne conserver que le triangle le plus proche intersecté en chaque pixel. La méthode de tracé utilisée est une méthode de tracé indirecte : on trace chaque triangle à tester sur la boîte qui englobe les pixels dont les rayons peuvent heurter ce triangle. Pour n'appliquer les résultats qu'à certains pixels de cette boîte, on utilise l'identificateur de l'émetteur associé au triangle, et l'image d'identificateurs primaire qui permet en chaque pixel de ne considérer le calcul comme valide que si les deux identificateurs sont identiques. Plus précisément :
- l'image de taille écran recevant les ombres est colorée en noir (pas d'id), la profondeur du z-buffer associé est mise à 1.0f (profondeur maximale),
- une zone couvrant les pixels du plan du faisceau est tracée pour chaque triangle visible dans la réflexion.
- le *« vertex shader »* calcule le point d'intersection du rayon incident sur le plan du faisceau, ainsi que la direction de réflexion.
- le *« pixel shader »* calcule le point d'intersection - si une intersection effective existe - entre le triangle et le rayon correspondant à chaque pixel. La longueur du rayon rapportée à la longueur maximale possible de celui-ci (dimensions de la sphère englobant la scène) dans le contexte de la scène est écrite dans le z-buffer. Par conséquent, seuls les triangles qui sont les premiers à couper les rayons réfléchis subsistent dans l'image d'identificateurs.

On utilise l'image contenant les points de départ des rayons, et celle contenant leur direction pour la résolution. Le résultat du tracé est une image d'identificateurs de triangles : c'est l'image réfléchie 40 (figure 5).

Cette image d'identificateurs secondaires est stockée dans la mémoire du GPU puis transférée au CPU, lequel dispose désormais des numéros d'identification des triangles visibles par réflexions à chacun des pixels de l'image.

### Calcul du rayon d'ombre dans une image réfléchie 1630

Si l'on souhaite plus de finesse dans le rendu, il peut être prévu de calculer le rayon d'ombre dans l'image réfléchie.

Pour cela, il est possible de reprendre le processus de l'étape 150, à condition de disposer des informations suivantes, lesquelles peuvent être calculées aisément, par exemple par deux passes de rendu GPU :
- points d'intersection des rayons réfléchis,
- image d'identificateurs des rayons réfléchis.

Les points d'intersection peuvent être déterminés de plusieurs manières :
- en récupérant l'image des directions réfléchies à la pleine précision et en calculant les intersections droites-plans pour chaque rayon, exactement de la même manière que cela est réalisé pour le rayon primaire,
- en utilisant une passe de tracé supplémentaire calculant les coordonnées d'intersection des points touchés par les rayons réfléchis et en récupérant cette information sur le CPU.

On note que l'image d'identificateurs a déjà été calculée lors de la propagation précédente du faisceau, dans le cas d'une réflexion ou transmission.

On calcule ainsi les informations d'ombrage des triangles vus en réflexion, sorte de masque de lumière qui sera utilisé pour la restitution des couleurs des triangles vus en réflexion.

### Calcul d'éclairage pour l'image réfléchie 1640

Cette étape consiste au même titre que l'étape 1540 précédemment évoquée, à calculer les couleurs des pixels vus en réflexion tout en tenant compte, si possible, des ombres subies par ces pixels vus en réflexion. Du fait de la réflexion (ou transmission), il s'agit de l'éclairage indirect.

Cette étape est réalisée par le GPU, et pour calculer l'éclairage indirect, le GPU doit connaître:
- L'image des points de départ des rayons (calculée précédemment),
- L'image des directions de ces rayons (calculée précédemment),
- L'image des identificateurs des triangles récepteurs d'éclairage qui correspond à l'image d'identificateurs des triangles visibles dans les réflexions.

En disposant de ces informations, les *shaders* du GPU permettent de calculer l'éclairage à l'aide des propriétés des matériaux des objets visibles dans la réflexion.

On part de l'image d'identificateurs secondaires pour déterminer la couleur des éléments visibles dans la réflexion, en tenant compte notamment des rayons d'ombre et de l'éclairage indirect. Il s'agit du tracé des rayons B3 et B4 dans l'exemple de la figure 18. Le processus est similaire à celui utilisé pour tracer des ombres:
- L'image de taille écran recevant la couleur réfléchie est colorée en noir.
- Une zone couvrant les pixels de chaque triangle visible dans l'image d'id réfléchie est tracée pour ce triangle.
- Le *« vertex shader »* calcule le point d'intersection du rayon incident sur le plan du faisceau, ainsi que sa direction de réflexion.
- *Le « pixel shader* » calcule l'intersection du rayon réfléchi avec le triangle. Le point d'impact de l'intersection permet de calculer B3 et B4. Le test d'égalité des identificateurs permet de ne valider le calcul d'intersection que pour les pixels correspondant au triangle dont on calcule l'éclairage et qui n'est pas forcément visible pour tous les pixels du quadrilatère tracé.

L'image ainsi obtenue comprend pour chacun des pixels visibles, la couleur de l'élément vu en réflexion (tenant compte de l'ombre).

Il est entendu que ce processus de calcul sur rayon réfléchi peut être appliqué aux rayons transmis mais également à des rayons réfléchis de rang supérieur (c'est-à-dire ayant subis de nombreuses réflexions ou transmissions). Puisque l'invention travaille profondeur par profondeur dans l'arbre des rayons, il convient de recalculer pour chacune des propagations, les nouveaux faisceaux répondant au mieux à la propagation (génération de l'image d'identificateurs ainsi que des directions de ré-émission) et d'appliquer le structure d'accélération aux faisceaux pour restreindre l'espace des triangles de maillage à étudier puis enfin à calculer les intersections du faisceau propagé avec cet ensemble restreint. C'est le principe de récursivité qui s'applique d'une profondeur à une autre et d'un type de propagation à un autre.

On obtient ainsi un ensemble d'images de la scène comprenant les composantes couleurs des pixels pour la réflexion, la transmission (de premier ordre ou suivant). Par exemple, pour une profondeur de deux réflexions et transmissions, les images produites à cette étape sont :
- image de première réflexion tenant compte des ombres,
   - image de deuxième réflexion suite à la première réflexion,
   - image de transmission suite à la première réflexion,
- image de première transmission tenant compte des ombres,
   - image de réflexion suite à la première transmission,
   - image de deuxième transmission suite à la première transmission.

### Rendu final 180

La synthèse de l'image finale est réalisée par le GPU à partir des différentes images calculées lors des étapes décrites précédemment, par sommation et modulation de chacune de ces images :
- *L'étape 1540 a produit une image contenant le résultat directement visible par la caméra des éléments de la scène, en prenant en compte les ombres et les couleurs de ces éléments.*
- *Les étapes récursives 1640 produisent chacune une image contenant le résultat visible pour le rayon considéré dans l'arbre des rayons propagés pour la scène, en prenant en compte les ombres à ce niveau.*

Ces images sont additionnées pixel par pixel et modulées entre elles en fonction des propriétés des matériaux qui constituent les éléments de la scène (on tient compte des coefficients de réflexion ou transmission pour un rendu plus précis).

La présente invention offre des performances notables au regard des autres techniques de l'art antérieur. Ainsi, les performances de calcul de l'image en figure 19 entre la présente invention et la solution Mental Ray (http://www.mentalimages.com) commercialisée sont récapitulées dans le tableau suivant :

| Résolution | Mental Ray (sec) | RED (sec) | Accélération |
|---|---|---|---|
| 640x480 | 16 | 0.25 | x 63 |
| 800x600 | 23 | 0.32 | x 70 |
| 1024x768 | 37 | 0.44 | x 82 |
| 1280x1024 | 60 | 0.68 | x 87 |

La présente invention s'applique au rendu d'images, en permettant notamment de calculer des images plus complexes, plus rapidement que les technologies existantes, à qualité équivalente. Elle permet d'arbitrer entre qualité et vitesse pour répondre aux besoins de plusieurs secteurs.

On distingue notamment les secteurs suivants dans lesquels la synthèse d'images est le coeur de métier : simulation (de vol par exemple), CAO (bureaux de design), jeux vidéo, post-production de films (effets spéciaux) ou dessins animés de synthèse, ...

## Revendications

1. Procédé d'élaboration d'une image de synthèse d'une scène depuis une caméra, ladite scène comprenant une pluralité d'objets définis par des maillages élémentaires stockés dans une base de données, le procédé étant **caractérisé en ce qu'**il comprend :
- (a) une étape de définition, par une unité centrale de traitement (10), d'une pluralité de rayons issus de ladite caméra vers ladite scène observée ;
- (b) une étape de traitement de ladite pluralité de rayons comprenant :
o une sous-étape (b4) de regroupement de rayons en faisceaux, les rayons d'un même faisceau ayant des points d'intersection, avec les éléments de maillage, spatialement cohérents ;
- (c) une étape de propagation desdits faisceaux, comprenant :
(c1) une première étape de détermination réalisés par une unité centrale de traitement connectée à ladite base de données, pour chacun desdits faisceaux propagés, d'un sous-ensemble de tous les éléments de maillage qui sont intersectés par ledit faisceau propagé ; puis
(c2) une deuxième étape de calcul, par une unité de traitement graphique (20) et pour chacun desdits faisceaux propagés, des intersections entre les éléments de maillage dudit sous-ensemble et les rayons du faisceau propagé ;
- (d) une étape de génération de ladite image de la scène suite à ladite étape de propagation.

2. Procédé d'élaboration d'une image de synthèse selon la revendication 1, **caractérisé en ce que** ladite étape de détermination (c1) d'un sous-ensemble d'éléments de maillage comprend une sous-étape de propagation du faisceau selon une structure d'accélération et de détermination desdits éléments de maillage intersectés, ladite structure d'accélération étant une décomposition spatiale simple de l'espace de la scène, et **en ce que** ledit sous-ensemble est constitué de l'ensemble desdits éléments de maillage intersectés par le faisceau le long de la structure d'accélération.

3. Procédé d'élaboration d'une image de synthèse selon l'une des revendications 1 à 2, **caractérisé en ce que**, pour une image de synthèse représentée par une pluralité de pixels, il est généré au plus un rayon par pixel traversant ce pixel lors de ladite étape de génération de rayons (a).

4. Procédé d'élaboration d'une image de synthèse selon l'une des revendications 1 à 2, **caractérisé en ce que**, pour une image de synthèse représentée par une pluralité de pixels, il est généré un ensemble de rayons par pixel, tous traversant ce pixel, lors de ladite étape de génération de rayons (a).

5. Procédé d'élaboration d'une image de synthèse selon la revendication 3 ou 4, **caractérisé en ce que** ladite étape de traitement des rayons (b) comprend, en outre préalablement à la sous-étape (b4) :
- une sous-étape (b1) de génération, par ladite unité de traitement graphique, d'une image d'identificateurs de la scène, ladite image d'identificateurs comprenant :
o une pluralité de pixels correspondant à ladite pluralité de pixels représentant l'image de synthèse, et
o en chaque pixel, les données d'identification d'un ou plusieurs éléments de maillage visibles au pixel correspondant de l'image de synthèse ;
- une sous-étape (b2) de détermination, pour chaque pixel de l'image d'identificateurs traversé par au moins un rayon, d'au moins un point d'intersection dudit(desdits) rayon(s) primaire(s) traversant le pixel avec le(s)dit(s) élément(s) de maillage dont les données d'identification sont enregistrées aux coordonnées du pixel, lorsque de telles données d'identification existent pour le pixel ;
- une sous-étape (b3) de regroupement des pixels dont lesdits points d'intersection précédemment déterminés sont spatialement cohérents ;
et **en ce que** ladite sous-étape de regroupement en faisceaux (b4) consiste à regrouper au sein d'un même faisceau les rayons associés aux pixels regroupés lors de ladite sous-étape (b3).

6. Procédé d'élaboration d'une image de synthèse selon la revendication 1, **caractérisé en ce que** lesdits faisceaux propagés comprennent les faisceaux transmis et/ou réfléchis et/ou d'ombre.

7. Procédé d'élaboration d'une image de synthèse selon la revendication précédente, **caractérisé en ce que** ladite étape de propagation desdits faisceaux (c) est appliquée récursivement à chacun desdits faisceaux transmis et/ou réfléchis.

8. Procédé d'élaboration d'une image de synthèse selon la revendication 6, **caractérisé en ce qu'**il comprend, de manière récursive, à chaque nouvelle propagation, une étape, par ladite unité centrale, de traitement des rayons propagés conformément à l'étape (b) pour les regrouper en faisceaux (b4) et une étape de propagation des faisceaux conformément aux étapes (c1) et (c2).

9. Procédé d'élaboration d'une image de synthèse selon la revendication 6 ou 7, **caractérisé en ce qu'**il comprend, lorsque lesdites intersections calculées lors de ladite étape de calcul (c2) ne sont pas spatialement cohérentes, une étape de division (c3) d'un faisceau propagé en des sous-faisceaux propagés regroupant les rayons dont les intersections calculées à l'étape (c2) sont spatialement cohérentes.

10. Procédé d'élaboration d'une image de synthèse selon l'une des revendications 6 à 9, **caractérisé en ce qu'**il comprend, en outre, une étape de division (c3') d'un faisceau propagé transmis ou réfléchi présentant des rayons non-cohérents en sous-faisceaux.

11. Programme d'ordinateur comprenant une pluralité d'instructions exécutables sur un ordinateur et aptes à réaliser le procédé d'élaboration d'une image de synthèse selon l'une quelconque des revendications précédentes.

12. Support de stockage informatique comprenant une pluralité d'instructions numériques exécutables sur un ordinateur et aptes à réaliser le procédé d'élaboration d'une image de synthèse selon l'une quelconque des revendications 1 à 10.

13. Système pour la mise en oeuvre du procédé selon l'une quelconque des revendications 1 à 10, **caractérisé en ce qu'**il comprend au moins une unité centrale de traitement reliée à au moins une mémoire de stockage et au moins une unité de traitement graphique relié à ladite unité centrale de traitement par un bus,
- ladite unité centrale de traitement comprenant des moyens aptes à générer (a) des rayons issus de ladite caméra vers ladite scène observée, à regrouper (b4), en faisceaux, lesdits rayons dont les points d'intersection avec les éléments de maillage sont spatialement cohérents, à déterminer la propagation (c) desdits faisceaux et à déterminer (d), pour chacun des faisceaux propagés, un sous-ensemble de tous les éléments de maillage qui sont intersectés par ledit faisceau propagé ;
- ladite unité de traitement graphique comprenant des moyens aptes à calculer (c2), pour chacun desdits faisceaux propagés, les intersections entre les éléments de maillage dudit sous- ensemble et lesdits rayons propagés et à générer (d) une image de la scène à l'aide desdits faisceaux propagés.

## Claims

1. A process for preparing a synthesis image of a scene from a camera, said scene comprising a plurality of objects defined by elementary meshes stored in a database, the process being **characterized in that** it comprises:
- (a) a step of defining, by a central processing unit (10), a plurality of rays from said camera towards said observed scene;
- (b) a step of processing said plurality of rays comprising:
o a sub-step (b4) of grouping together rays into beams, the rays of a same beam having spatially coherent intersecting points with the meshing elements;
- (c) a step of propagating said beams, comprising:
(c1) a first step of determining, for each of said propagated beams, a subset of all the meshing elements that are intersected by said propagated beam, carried out by a central processing unit connected to said database; and then
(c2) a second step of calculating, for each of said propagated beams, intersections between the meshing elements of said subset and the rays of the propagated beam, by a graphics processing unit (20);
- (d) a step of generating said image of the scene further to said propagation step.

2. The process for preparing a synthesis image according to claim 1, **characterized in that** said step of determining (c1) a subset of meshing elements comprises a sub-step of propagating the beam according to an accelerating structure and of determining said intersected meshing elements, said accelerating structure being a simple spatial decomposition of the space of the scene, and **in that** said subset is constituted of all of said meshing elements intersected by the beam along the accelerating structure.

3. The process for preparing a synthesis image according to one of claims 1 to 2, **characterized in that**, for a synthesis image represented by a plurality of pixels, at most one ray per pixel going through this pixel during said ray generating step (a) is generated.

4. The process for preparing a synthesis image according to one of claims 1 to 2, **characterized in that**, for each synthesis image represented by a plurality of pixels, a set of rays per pixel, all going through this pixel, during said ray generating step (a), is generated.

5. The process for preparing a synthesis image according to claim 3 or 4, **characterized in that** said ray processing step (b) further comprises, prior to sub-step (b4):
- a sub-step (b1) of generating, by said graphics processing unit, an identifiers image of the scene, said identifiers image comprising:
o a plurality of pixels corresponding to said plurality of pixels representing the synthesis image, and
o in each pixel, the identification data of one or more meshing elements visible for a corresponding pixel of the synthesis image;
- a sub-step (b2) of determining, for each pixel of the identifiers image being going through by at least one ray, at least one intersecting point of said primary ray(s) going through the pixel with said meshing element(s) the identification data of which are recorded at the pixel coordinates, when such identification data exist for the pixel;
- a sub-step (b3) of grouping together pixels whose said previously determined intersecting points are spatially coherent;
and **in that** said beam grouping together sub-step (b4) consists of grouping together, within the same beam, the rays associated with pixels grouped together during said sub-step (b3).

6. The process for preparing a synthesis image according to claim 1, **characterized in that** said propagated beams comprise the transmitted and/or reflected and/or shadow beams.

7. The process for preparing a synthesis image according to the previous claim, **characterized in that** said step of propagating said beams (c) is applied recursively to each of said transmitted and/or reflected beams.

8. The process for preparing a synthesis image according to claim 6, **characterized in that** it comprises, recursively, at each new propagation, a step of processing, by said central unit, the propagated rays according to step (b) to group them together into beams (b4) and a step of propagating the beams according to steps (c1) and (c2).

9. The process for preparing a synthesis image according to claim 6 or 7, **characterized in that** it comprises, when said intersections calculated during said calculation step (c2) are not spatially coherent, a step of dividing (c3) a propagated beam into propagated sub-beams grouping together the rays whose intersections calculated in step (c2) are spatially coherent.

10. The process for preparing a synthesis image according to one of claims 6 to 9, **characterized in that** it further comprises a step of dividing (c3') a propagated transmitted or reflected beam having non-coherent rays into sub-beams.

11. A computer program comprising a plurality of instructions executable on a computer and able to perform the process for preparing a synthesis image according to any one of the previous claims.

12. A computer storage support comprising a plurality of digital instructions executable on a computer and able to perform the process for preparing a synthesis image according to any one of claims 1 to 10.

13. A system for implementing the process according to any one of claims 1 to 10, **characterized in that** it comprises at least one central processing unit linked to at least one storage memory and at least one graphics processing unit linked to said central processing unit by a bus,
- said central processing unit comprising means able to generate (a) rays from said camera towards said observed scene, to group together (b4), into beams, said rays whose points of intersection with the meshing elements are spatially coherent, to determine the propagation (c) of said beams and to determine (d), for each of the propagated beams, a subset of all the meshing elements that are intersected by said propagated beam;
- said graphics processing unit comprising means able to calculate (c2), for each of said propagated beams, the intersections between the meshing elements of said subset and said propagated rays and to generate (d) an image of the scene by using said propagated beams.

## Patentansprüche

1. Verfahren zur Erstellung eines Synthesebilds einer Szene von einer Kamera aus, wobei die Szene eine Vielzahl von Objekten aufweist, die durch in einer Datenbank gespeicherte elementare Vernetzungen definiert sind, wobei das Verfahren **dadurch gekennzeichnet ist, dass** es Folgendes umfasst:
- (a) einen Schritt der Bestimmung einer Vielzahl von Strahlen aus der Kamera zu der beobachteten Szene durch eine zentrale Verarbeitungseinheit (10),
- (b) einen Schritt der Verarbeitung der Vielzahl von Strahlen mit
• einem Unterschritt (b4) der Bündelung von Strahlen, wobei die Strahlen eines selben Bündels räumlich kohärente Schnittpunkte mit den Vemetzungselementen aufweisen,
- (c) einen Schritt der Ausbreitung der Strahlenbündel mit
(c1) einem ersten Schritt der Bestimmung - für jedes der ausgebreiteten Strahlenbündel - einer Untermenge aller durch das ausgebreitete Strahlenbündel geschnittenen Vernetzungselemente durch eine mit der Datenbank verbundene zentrale Verarbeitungseinheit, gefolgt von
(c2) einem zweiten Schritt der Berechnung der Schnittpunkte der Vemetzungselemente der Untermenge mit den Strahlen des ausgebreiteten Strahlenbündels durch eine grafische Verarbeitungseinheit (20) und für jedes der ausgebreiteten Strahlenbündel,
- (d) einen Schritt der Erzeugung des Bilds der Szene in Anschluss an den Schritt der Ausbreitung.

2. Verfahren zur Erstellung eines Synthesebilds nach Anspruch 1, **dadurch gekennzeichnet, dass** der Schritt der Bestimmung (c1) einer Untermenge von Vemetzungselementen einen Unterschritt der Ausbreitung des Strahlenbündels gemäß einer Struktur der Beschleunigung und der Bestimmung der geschnittenen Vemetzungselemente umfasst, wobei die Beschleunigungsstruktur eine einfache räumliche Zerlegung des Szenenraums ist, und dass die Untermenge durch die Gesamtheit der Vernetzungselemente gebildet ist, die durch das Strahlenbündel entlang der Beschleunigungsstruktur geschnitten werden.

3. Verfahren zur Erstellung eines Synthesebilds nach einem der Ansprüche 1 bis 2, **dadurch gekennzeichnet, dass** für ein durch eine Vielzahl von Pixeln abgebildetes Synthesebild bei dem Schritt der Strahlenerzeugung (a) maximal ein Strahl pro Pixel erzeugt wird, der dieses Pixel durchquert.

4. Verfahren zur Erstellung eines Synthesebilds nach einem der Ansprüche 1 bis 2, **dadurch gekennzeichnet, dass** für ein durch eine Vielzahl von Pixeln abgebildetes Synthesebild bei dem Schritt der Strahlenerzeugung (a) je Pixel eine Menge von Strahlen erzeugt wird, die alle dieses Pixel durchqueren.

5. Verfahren zur Erstellung eines Synthesebilds nach Anspruch 3 oder 4, **dadurch gekennzeichnet, dass** der Schritt der Strahlenverarbeitung (b) ferner vor dem Unterschritt (b4) Folgendes umfasst:
- einen Unterschritt (b1) der Erzeugung eines Bilds aus Identifikatoren der Szene durch die grafische Verarbeitungseinheit, wobei das Bild aus Identifikatoren Folgendes umfasst:
• eine Vielzahl von Pixeln, die der Vielzahl von Pixeln entspricht, welche das Synthesebild abbildet, und
• an jedem Pixel die Identifikationsdaten eines oder mehrerer Vernetzungselemente, die an dem entsprechenden Pixel des Synthesebilds sichtbar sind,
- einen Unterschritt (b2) der Bestimmung - für jedes Pixel des Bilds aus Identifikatoren, das von mindestens einem Strahl durchquert wird - mindestens eines Schnittpunkts des Primärstrahls bzw. der Primärstrahlen, der bzw. die das Pixel durchquert bzw. durchqueren, mit dem Vernetzungselement bzw. den Vernetzungselementen, dessen bzw. deren Identifikationsdaten an den Pixelkoordinaten aufgezeichnet werden, wenn es für das Pixel solche Identifikationsdaten gibt,
- einen Unterschritt (b3) der Zusammenlegung der Pixel, deren zuvor bestimmte Schnittpunkte räumlich kohärent sind,
und dass der Unterschritt der Bündelung (b4) darin besteht, innerhalb eines selben Bündels die Strahlen zusammenzufassen, die den bei dem Unterschritt (b3) zusammengelegten Pixeln zugeordnet sind.

6. Verfahren zur Erstellung eines Synthesebilds nach Anspruch 1, **dadurch gekennzeichnet, dass** die ausgebreiteten Strahlenbündel die übertragenen und/oder reflektierten Strahlenbündel und/oder die Schattenbündel umfassen.

7. Verfahren zur Erstellung eines Synthesebilds nach dem vorhergehenden Anspruch, **dadurch gekennzeichnet, dass** der Schritt der Ausbreitung der Strahlenbündel (c) rekursiv auf jedes der übertragenen und/oder reflektierten Strahlenbündel angewendet wird.

8. Verfahren zur Erstellung eines Synthesebilds nach Anspruch 6, **dadurch gekennzeichnet, dass** es rekursiv bei jeder neuen Ausbreitung einen Schritt der Verarbeitung der ausgebreiteten Strahlen gemäß Schritt (b) durch die Zentraleinheit, um sie zu bündeln (b4), und einen Schritt der Ausbreitung der Strahlenbündel gemäß den Schritten (c1) und (c2) umfasst.

9. Verfahren zur Erstellung eines Synthesebilds nach Anspruch 6 oder 7, **dadurch gekennzeichnet, dass**, wenn die bei dem Schritt der Berechnung (c2) berechneten Schnittpunkte nicht räumlich kohärent sind, es einen Schritt der Teilung (c3) eines ausgebreiteten Strahlenbündels in ausgebreitete Unterstrahlenbündel umfasst, welche die Strahlen zusammenfassen, deren in Schritt (c2) berechnete Schnittpunkte räumlich kohärent sind.

10. Verfahren zur Erstellung eines Synthesebilds nach einem der Ansprüche 6 bis 9, **dadurch gekennzeichnet, dass** es ferner einen Schritt (c3') der Teilung eines übertragenen oder reflektierten ausgebreiteten Strahlenbündels mit nicht kohärenten Strahlen in Unterstrahlenbündeln umfasst.

11. Computerprogramm mit einer Vielzahl von Anweisungen, die auf einem Computer durchführbar sind und geeignet sind, das Verfahren zur Erstellung eines Synthesebilds nach einem der vorhergehenden Ansprüche durchzuführen.

12. Computerspeichermedium mit einer Vielzahl von digitalen Anweisungen, die auf einem Computer durchführbar sind und geeignet sind, das Verfahren zur Erstellung eines Synthesebilds nach einem der Ansprüche 1 bis 10 durchzuführen.

13. System zur Umsetzung des Verfahrens nach einem der Ansprüche 1 bis 10, **dadurch gekennzeichnet, dass** es mindestens eine mit mindestens einem Speicher verbundene zentrale Verarbeitungseinheit und mindestens eine mit der zentralen Verarbeitungseinheit über einen Bus verbundene grafische Verarbeitungseinheit umfasst,
- wobei die zentrale Verarbeitungseinheit Mittel umfasst, die geeignet sind, Strahlen aus der Kamera zu der beobachteten Szene zu erzeugen (a), die Strahlen, deren Schnittpunkte mit den Vemetzungselementen räumlich kohärent sind, zu bündeln (b4), die Ausbreitung der Strahlenbündel zu bestimmen (c) und für jedes der ausgebreiteten Strahlenbündel eine Untermenge aller Vemetzungselemente zu bestimmen (d), die durch das ausgebreitete Strahlenbündel geschnitten werden,
- wobei die Verarbeitungseinheit Mittel umfasst, die geeignet sind, für jedes der ausgebreiteten Strahlenbündel die Schnittpunkte der Vemetzungselemente der Untermenge mit den ausgebreiteten Strahlen zu berechnen (c2) und ein Bild der Szene mit Hilfe der ausgebreiteten Strahlenbündel zu erzeugen (d).
